(19) Europäisches Patentamt
European Patent Office
Office européen des brevets

(11) **EP 3 626 757 A1**

(12) **EUROPÄISCHE PATENTANMELDUNG**

(43) Veröffentlichungstag:
**25.03.2020 Patentblatt 2020/13**

(51) Int Cl.:
*C08G 59/68* (2006.01)     *C09J 163/00* (2006.01)

(21) Anmeldenummer: **18195409.0**

(22) Anmeldetag: **19.09.2018**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(72) Erfinder:
• **Behrens, Nicole**
  **81245 München (DE)**
• **Bornschlegl, Alexander**
  **81245 München (DE)**
• **Pfeil, Armin**
  **86916 Kaufering (DE)**

(74) Vertreter: **Hilti Aktiengesellschaft
Corporate Intellectual Property
Feldkircherstrasse 100
Postfach 333
9494 Schaan (LI)**

(71) Anmelder: **Hilti Aktiengesellschaft
9494 Schaan (LI)**

(54) **VERWENDUNG VON SALZEN ALS BESCHLEUNIGER IN EINER EPOXIDHARZMASSE ZUR CHEMISCHEN BEFESTIGUNG**

(57)    Die Erfindung betrifft die Verwendung wenigstens eines Salzes (S) ausgewählt aus der Gruppe bestehend aus Salzen der Salpetersäure, Salzen der Salpetrigen Säure, Salzen der Halogene und Salzen der Trifluormethansulfonsäure als Beschleuniger in einer Epoxidharzmasse zur chemischen Befestigung. Weiterhin betrifft die vorliegende Erfindung ein Verfahren zur chemischen Befestigung von Konstruktionselementen und Verankerungsmittels, wie Ankerstangen, Ankerbolzen, (Gewinde)stangen, (Gewinde)hülsen, Betoneisen, Schrauben und dergleichen in Bohrlöchern in verschiedenen Untergründen.

EP 3 626 757 A1

**Beschreibung**

Die Erfindung betrifft die Verwendung wenigstens eines Salzes (S) ausgewählt aus der Gruppe bestehend aus Salzen der Salpetersäure, Salzen der Salpetrigen Säure, Salzen der Halogene und Salzen der Trifluormethansulfonsäure als Beschleuniger in einer Epoxidharzmasse zur chemischen Befestigung. Weiterhin betrifft die vorliegende Erfindung ein Verfahren zur chemischen Befestigung von Konstruktionselementen und Verankerungsmittels, wie Ankerstangen, Ankerbolzen, (Gewinde)stangen, (Gewinde)hülsen, Betoneisen, Schrauben und dergleichen in Bohrlöchern in verschiedenen Untergründen.

Mehrkomponenten-Mörtelmassen auf der Grundlage von härtbaren Epoxidharzen und Aminhärtern sind seit langem bekannt und werden als Klebstoffe, Spachtelmassen zur Rissverfüllung und chemische Dübel zur Befestigung von Konstruktionselementen wie Ankerstangen, Bewehrungseisen und Schrauben in Bohrlöchern verschiedenen Untergrunds verwendet. Zur Anwendung auf Baustellen im Freien müssen die Mörtelmassen einerseits in einem breiten Temperaturbereich gut handhabbar sein und sollen andererseits bei erhöhten Temperaturen ein nur geringes Kriechen zeigen. Gleichzeitig sollen die Mörtelmassen eine lange Verarbeitungsdauer besitzen und in einem breiten Temperaturbereich schnell und vollständig aushärten, wobei die ausgehärteten Mörtelmassen auch bei feuchten Bohrlöchern und hohen Temperaturen hohe Lastwerte erzielen und eine gute Wärmeformbeständigkeit aufweisen sollen.

Diese Eigenschaftsprofile sind nicht ohne weiteres zu erfüllen. So ist es bei herkömmlichen Mörtelmassen üblich, zur Erzielung einer guten Handhabbarkeit einen hohen Anteil von niedrigviskosen Bestandteilen, einen geringen Füllstoffanteil und grobe Füllstoffe vorzusehen, was allerdings für ein geringes Kriechverhalten unter Last bei erhöhten Temperaturen von Nachteil ist. Andererseits wird eine lange Verarbeitungszeit durch einen hohen Anteil an nicht reaktiven bzw. nicht vernetzenden Verdünnern und wenig reaktiven Komponenten erreicht, was einer kurzen Aushärtezeit entgegensteht.

Mörtelmassen auf Epoxid-Amin-Basis weisen außerdem eine langsame Aushärtekinetik, eine verlängerte Topf- bzw. Gelzeit sowie gewöhnlich eine geringe Wärmebeständigkeit und Kriechfestigkeit auf. Dies führt dazu, dass sie nur in einem engen Temperaturbereich gut handhabbar sind und gute Lastwerte erreichen. Das Einstellen der Aushärtezeit von Mörtelmassen auf Epoxid-Amin-Basis erfolgt in der Regel durch die Auswahl eines entsprechenden Amins und/oder durch Zugabe von Katalysatoren wie beispielsweise tertiären Aminen, Alkoholen und Säuren. Diese Substanzen, die als Beschleuniger verwendet werden können, haben jedoch deutliche Veränderungen der Endeigenschaften der ausgehärteten Mörtelmasse zur Folge und führen nicht selten zu Problemen bei den applikationsrelevanten Eigenschaften. Insbesondere sind häufig negative Auswirkungen auf die Ausfestigkeit (Lastwerte) des ausgehärteten Mörtels zu beobachten.

In der GB1105772 A wird die beschleunigende Wirkung von anorganischen Metallsalzen auf die Reaktion von Epoxidharzen mit Aminen beschrieben. In der Regel werden entsprechend mit anorganischen Salzen beschleunigte Epoxid-Amin-Systeme als Beschichtungen eingesetzt. Dies ist beispielsweise in der US2016/053108 A1, der US2003/130481 A1 oder der US5958593 beschrieben. Zusammensetzungen zum Einsatz als Beschichtungen zeigen üblicherweise eine hohe mechanische Dehnbarkeit und sind daher zur chemischen Befestigung ungeeignet. Mörtelmassen zur chemischen Befestigung müssen eine hohe Sprödigkeit aufweisen, um die für die chemische Befestigung geforderte Auszugsfestigkeit zu haben.

Die Aufgabe der Erfindung ist daher, eine Lösung zur chemischen Befestigung von Konstruktionselementen bereitzustellen, die eine erhebliche Verkürzung der Aushärtezeit ermöglicht ohne die Auszugsfestigkeit der Mörtelmasse zu beeinträchtigen. Insbesondere sollen die Mörtelmassen innerhalb eines Zeitfensters von weniger als 7 Stunden, insbesondere von weniger als 4 Stunden, belastbar sein (90 % der Referenzlast) und hervorragende Auszugsfestigkeit aufweisen.

Die der Erfindung zugrundeliegende Aufgabe wird durch die Verwendung eines Salzes (S) als Beschleuniger in einer Epoxidharzmasse zur chemischen Befestigung gemäß Anspruch 1 gelöst. Bevorzugte Ausführungsformen der erfindungsgemäßen Verwendung sind in den Unteransprüchen angegeben, die wahlweise miteinander kombiniert werden können.

Gegenstand der Erfindung ist ferner ein Verfahren zur chemischen Befestigung von Konstruktionselementen und/oder Verankerungsmittels gemäß Anspruch 12. Bevorzugte Ausführungsformen der erfindungsgemäßen Verwendung sind in den Unteransprüchen angegeben, die wahlweise miteinander kombiniert werden können.

Im Sinne der Erfindung haben die hier und in der nachfolgenden Beschreibung verwendeten Begriffe die folgende Bedeutung:

*"aliphatische Verbindungen"* sind acyclische oder cyclische, gesättigte oder ungesättigte Kohlenstoffverbindungen, ausgenommen aromatische Verbindungen;

*"alicyclische Verbindungen"* sind Verbindungen mit einer carbocyclischen Ringstruktur, ausgenommen Benzolderivate oder andere aromatische Systeme;

*"araliphatische Verbindungen"* sind aliphatische Verbindungen mit einem aromatischen Grundgerüst, so dass im Falle einer funktionalisierten araliphatischen Verbindung eine vorhandene funktionelle Gruppe an den aliphatischen und nicht den aromatischen Teil der Verbindung angebunden ist;

*"aromatische Verbindungen"* sind Verbindungen, die der Hückel (4n+2)-Regel folgen;

*"Amine"* sind Verbindungen, die durch Austausch von einem, zwei oder drei Wasserstoffatomen durch Kohlenwasserstoffgruppen aus Ammoniak abgeleitet sind und die allgemeinen Strukturen $RNH_2$ (primäre Amine), $R_2NH$ (sekundäre Amine) und $R_3N$ (tertiäre Amine) aufweisen (siehe: IUPAC Compendium of Chemical Terminology, 2nd ed. (the "Gold Book"), Compiled by A. D. McNaught and A. Wilkinson, Blackwell Scientific Publications, Oxford (1997)): und

*"Salze"* sind Verbindungen, die aus positiv geladenen Ionen (Kationen) und negativ geladenen Ionen (Anionen) aufgebaut sind. Zwischen diesen Ionen liegen ionische Bindungen vor. Der Ausdruck *"Salze der Salpetersäure"* beschreibt Verbindungen, die von Salpetersäure ($HNO_3$) abgeleitet werden und als Anion ein Nitrat ($NO_3^-$) umfassen. Der Ausdruck *"Salze der Salpetrige Säure"* beschreibt Verbindungen, die von der Salpetrigen Säure ($HNO_2$) abgeleitet werden und als Anion ein Nitrit ($NO_2^-$) umfassen. Der Ausdruck *"Salze der Halogene"* beschreibt Verbindungen, die als Anion ein Element der 7. Hauptgruppe des Periodensystems umfassen. Insbesondere sind unter dem Ausdruck der *"Salze der Halogene"* solche Verbindungen zu verstehen, die die als Anion ein Fluorid ($F^-$), Chlorid ($Cl^-$), ein Bromid (Br) oder Iodid ($I^-$) umfassen. Der Ausdruck *"Salze der Trifluormethansulfonsäure"* beschreibt Verbindungen, die von der Trifluormethansulfonsäure ($CF_3SO_3H$) abgeleitet werden und als Anion ein Triflat ($CF_3SO_3^-$) umfassen. Der Begriff Salz im Sinne der vorliegenden Erfindung umfasst auch die entsprechenden Hydrate der Salze. Die Salze (S), welche als Beschleuniger eingesetzt werden, werden auch als Salze im Sinne der vorliegenden Erfindung bezeichnet.

Es wurde nunmehr überraschend gefunden, dass die Zugabe wenigstens eines Salzes (S) zu einer Epoxidharzmasse zur chemischen Befestigung zu einer erheblichen Beschleunigung der Aushärtereaktion führt. Die gehärteten Massen zeigen eine hervorragende Auszugsfestigkeit und können bereits nach kurzer Zeit, innerhalb von etwa 4 bis 6 Stunden, teilweise sogar noch wesentlich früher, wie beispielsweise nach weniger als 1 Stunde, belastet werden. Selbst bei der Verwendung von Aminen, die sehr lange Aushärtezeiten haben, sind nur geringe Mengen des Salzes (S) notwendig, um hervorragende Auszugsfestigkeiten nach kurzer Zeit realisieren zu können. Dadurch, dass bereits geringe Mengen des Salzes (S) als Beschleuniger ausreichen, hat das Salz (S) selbst keinen negativen Einfluss auf applikationsrelevanten Eigenschaften, wie beispielsweise die rheologischen Eigenschaften, der Epoxidharzmasse.

Die Epoxidharzmasse wird bevorzugt für Bauzwecke eingesetzt. Der Begriff "für Bauzwecke" bedeutet das Baukleben von Beton/Beton, Stahl/Beton oder Stahl/Stahl oder einer der genannten Materialien auf anderen mineralischen Materialien, die strukturelle Verstärkung von Bauteilen aus Beton, Mauerwerk und anderen mineralischen Materialien, die Armierungsanwendungen mit faserverstärkten Polymeren von Bauobjekten, die chemische Befestigung auf Oberflächen aus Beton, Stahl oder anderen mineralischen Materialien, insbesondere die chemische Befestigung von Konstruktionselementen und Verankerungsmitteln, wie Ankerstangen, Ankerbolzen, (Gewinde)stangen, (Gewinde)hülsen, Betoneisen, Schrauben und dergleichen, in Bohrlöchern in verschiedenen Untergründen, wie (Stahl)beton, Mauerwerk, anderen mineralischen Materialien, Metallen (z.B. Stahl), Keramiken, Kunststoffen, Glas und Holz.

Die Epoxidharzmasse ist bevorzugt eine Mehrkomponenten-Epoxidharzmasse, vorzugsweise eine Zweikomponenten-Epoxidharzmasse, die eine Epoxidharzkomponente (A) und eine Härterkomponente (B) umfasst. Die Epoxidharzkomponente (A) umfasst mindestens ein härtbares Epoxidharz. Die Härterkomponente (B) umfasst mindestens ein gegenüber Epoxidgruppen reaktives Amin. In der Mehrkomponenten-Epoxidharzmasse liegen die Epoxidharzkomponente (A) und die Härterkomponente (B) reaktionsinhibierend getrennt voneinander vor. Das als Beschleuniger eingesetzte Salz (S) kann in der Epoxidharzkomponente (A) oder in der Härterkomponente (B) oder sowohl in der Epoxidharzkomponente (A) als auch in der Härterkomponente (B) enthalten sein. Es ist bevorzugt, dass das Salz (S) mindestens in der Härterkomponente (B) enthalten ist. Bevorzugt ist das Salz (S) in der Härterkomponente (B) enthalten.

Das Salz (S) ist erfindungsgemäß mindestens ein Salz ausgewählt aus der Gruppe bestehend aus Salzen der Salpetersäure, Salzen der Salpetrigen Säure, Salzen der Halogene, Salzen der Trifluormethansulfonsäure sowie Kombinationen davon. Vorzugsweise ist das Salz (S) mindestens ein Salz ausgewählt aus der Gruppe bestehend aus Salzen der Salpetersäure, Salzen der Halogene, Salzen der Trifluormethansulfonsäure sowie Kombinationen davon. Es hat sich als besonders bevorzugt herausgestellt, dass das Salz (S) ausgewählt ist aus der Gruppe bestehend aus Nitraten ($NO_3^-$), Iodiden ($I^-$), Triflaten ($CF_3SO_3^-$) sowie Kombinationen davon.

Als Salze der Salpetersäure eignen sich insbesondere Alkalimetallnitrate, Erdalkalimetallnitrate, Lanthanoidnitrate, Aluminiumnitrat, Ammoniumnitrat sowie Mischungen davon. Entsprechende Salze der Salpetersäure sind im Handel käuflich erhältlich. Vorzugsweise werden als Salze der Salpetersäure Alkalimetallnitrate und/oder Erdalkalimetallnitrate verwendet, wie beispielsweise $Ca(NO_3)_2$ oder $NaNO_3$. Es ist auch möglich, dass als Salz (S) eine Lösung eines Salzes in Salpetersäure eingesetzt wird, wie beispielsweise eine Lösung enthaltend $Ca(NO_3)_2/HNO_3$. Zur Herstellung dieser Lösung wird $CaCO_3$ in $HNO_3$ gelöst.

Als Salze der Salpetrigen Säure eignen sich insbesondere Alkalimetallnitrite, Erdalkalimetallnitrite, Lanthanoidnitrite, Aluminiumnitrit, Ammoniumnitrit sowie Mischungen davon. Entsprechende Salze der Salpetrigen Säure sind im Handel käuflich erhältlich. Vorzugsweise werden als Salze der Salpetrigen Säure Alkalimetallnitrite und/oder Erdalkalimetallnitrite verwendet, wie beispielsweise $Ca(NO_2)_2$.

Als Salze der Halogene eignen sich insbesondere Alkalimetallhalogenide, Erdalkalimetallhalogenide, Lanthanoidhalogenide, Aluminiumhalogenide, Ammoniumhalogenide sowie Mischungen davon. Entsprechende Salze der Halogene sind im Handel käuflich erhältlich. Vorzugsweise werden die Halogene ausgewählt aus der Gruppe bestehend aus Chlorid, Bromid, Iodid sowie Mischungen davon, wobei insbesondere Iodide bevorzugt verwendet werden.

Als Salze der Trifluormethansulfonsäure eignen sich insbesondere Alkalimetalltriflate, Erdalkalimetalltriflate, Lanthanoidtriflate, Aluminiumtriflat, Ammoniumtriflat sowie Mischungen davon. Entsprechende Salze der Trifluormethansulfonsäure sind im Handel käuflich erhältlich. Vorzugsweise werden als Salze der Trifluormethansulfonsäure Alkalimetallnitrate und/oder Erdalkalimetallnitrate verwendet, wie beispielsweise $Ca(CF_3SO_3)_2$.

Prinzipiell können die Kationen des Salzes (S) organisch, anorganisch oder eine Mischung daraus sein. Vorzugsweise ist das Kation des Salzes (S) ein anorganisches Kation.

Als organische Kationen kommen beispielsweise mit organischen Resten, wie beispielsweise mit $C_1$-$C_6$-Alkylresten substituierte Ammoniumkationen, wie Tetraethylammoniumkationen, in Betracht.

Als anorganische Kationen des Salzes (S) kommen vorzugsweise Kationen in Betracht, die ausgewählt werden aus der Gruppe bestehend aus Alkalimetallen, Erdalkalimetallen, Lanthanoiden, Aluminium, Ammonium ($NH_4^+$) sowie Mischungen davon, bevorzugter aus der Gruppe bestehend aus Alkalimetallen, Erdalkalimetallen, Aluminium, Ammonium sowie Mischungen davon und noch bevorzugter aus der Gruppe bestehend aus Alkalimetallen, Erdalkalimetallen, Aluminium sowie Mischungen davon. Es ist insbesondere bevorzugt, dass das Kation des Salzes (S) ausgewählt ist aus der Gruppe bestehend aus Natrium, Calcium, Aluminium, Ammonium sowie Mischungen davon.

Somit eignen sich als Salz (S) insbesondere die folgenden Verbindungen bzw. Komponenten: $Ca(NO_3)_2$ (Calciumnitrat, üblicherweise eingesetzt als $Ca(NO_3)_2$ Tetrahydrat), eine Mischung aus $Ca(NO_3)_2/HNO_3$, $KNO_3$ (Kaliumnitrat), $NaNO_3$ (Natriumnitrat), $Mg(NO_3)_2$ (Magnesiumnitrat, üblicherweise eingesetzt als $Mg(NO_3)_2$ Hexahydrat), $Al(NO_3)_3$ (Aluminiumnitrat, üblicherweise eingesetzt als $Al(NO_3)_3$ Nonahydrat), $NH_4NO_3$ (Ammoniumnitrat), $Ca(NO_2)_2$ (Calciumnitrit), NaCl (Natriumchlorid), NaBr (Natriumbromid), NaI (Natriumiodid), $Ca(CF_3SO_3)_2$ (Calciumtriflat), $Mg(CF_3SO_3)_2$ (Magnesiumtriflat) und $Li(CF_3SO_3)_2$ (Lithiumtriflat).

Die Epoxidharzkomponente und/oder die Härterkomponente kann ein oder mehrere Salze (S) aufweisen. Die Salze können sowohl einzeln als auch im Gemisch von zwei oder mehreren der genannten Salze eingesetzt werden.

Zur Verbesserung der Löslichkeitseigenschaften des Salzes (S) in der Epoxidharzkomponente und/oder der Härterkomponente kann es vorgesehen sein, dass das Salz (S) in einem geeignete Lösemittel gelöst wird und entsprechend als Lösung eingesetzt wird. Hierfür eignen sich beispielsweise organische Lösemittel wie Methanol, Ethanol und Glycerin. Als Lösemittel kann aber auch Wasser verwendet werden, gegebenfalls auch in Mischung mit den vorgenannten organischen Lösemitteln. Zur Herstellung der entsprechenden Salzlösungen wird das Salz (S) in das Lösemittel gegeben und gerührt, vorzugsweise bis zur bis zur vollständigen Lösung.

Das Salz (S) ist in der Epoxidharzmasse bevorzugt in einem Anteil von 0,1 bis 4 Gew.-%, bevorzugt 0,1 bis 3 Gew.-% bezogen auf das Gesamtgewicht der Epoxidharzmasse enthalten.

In der bevorzugten Ausführungsform, in der das Salz (S) in der Härterkomponente enthalten ist, ist dieses vorzugsweise in einem Anteil von 0,1 bis 15 Gew.-% bezogen auf das Gesamtgewicht der Härterkomponente in der Härterkomponente enthalten. Vorzugsweise ist das Salz (S) in einem Anteil von 0,5 bis 12 Gew.-%, bevorzugter in einem Anteil 1,0 bis 10, noch bevorzugter in einem Anteil von 1,5 bis 8,0 Gew.-% bezogen auf das Gesamtgewicht der Härterkomponente in der Härterkomponente enthalten.

In der Ausführungsform, in der das Salz (S) in der Epoxidharzkomponente enthalten ist, ist dieses vorzugsweise in einem Anteil von 0,1 bis 5 Gew.-% bezogen auf das Gesamtgewicht der Epoxidharzkomponente in der Epoxidharzkomponente enthalten. Vorzugsweise ist das Salz (S) in einem Anteil von 0,5 bis 4 Gew.-%, bezogen auf das Gesamtgewicht der Epoxidharzkomponente in der Epoxidharzkomponente enthalten.

Die Härterkomponente (B) der Mehrkomponenten-Epoxidharzmasse umfasst mindestens ein gegenüber Epoxidharzen reaktives Amin als Härter. Das als Härter verwendete Amin ist ein Diamin oder Polyamin, das aus der Gruppe bestehend aus aliphatischen, alicyclischen, aromatischen und araliphatischen Aminen ausgewählt ist, und weist pro Molekül im Mittel mindestens zwei an ein Stickstoffatom gebundene reaktive Wasserstoffatome auf. Das Amin kann aus den für Epoxid-Amin-Systeme üblichen und dem Fachmann bekannten Aminen ausgewählt werden.

Beispiele geeigneter Amine sind im Folgenden angegeben, ohne jedoch den Umfang der Erfindung einzuschränken: 1,2-Diaminoethan(ethylendiamin), 1,2-Propandiamin, 1,3-Propandiamin, 1,4-Diaminobutan, 2,2-Dimethyl-1,3-propandiamin(neopentandiamin), Diethylaminopropylamin (DEAPA), 2-Methyl-1,5-diaminopentan, 1,3-Diaminopentan, 2,2,4- oder 2,4,4-Trimethyl-1,6-diaminohexan und Gemische davon (TMD), 1,3-Bis(aminomethyl)-cyclohexan (1,3-BAC), 1,2-Bis(aminomethyl)cyclohexan (1,2-BAC), Hexamethylendiamin (HMD), 1,2- und 1,4-Diaminocyclohexan (1,2-DACH und 1,4-DACH), Bis(4-aminocyclohexyl)methan (PACM) Bis(4-amino-3-methylcyclohexyl)methan, Diethylentriamin (DETA), 4-Azaheptan-1, 7-diamin, 1,11-Diamino-3, 6,9-trioxundecan, 1,8-Diamino-3, 6-dioxaoctan, 1,5-Diaminomethyl-3-azapentan, 1,10-Diamino-4, 7-dioxadecan, Bis(3-aminopropyl)amin, 1,13-Diamino-4,7, 10-trioxatridecan, 4-Aminomethyl-1, 8-diaminooctan, 2-Butyl-2-ethyl-1, 5-diaminopentan, N, N-Bis-(3-aminopropyl)methylamin, Triethylentetramin (TETA), Tetraethylenpentamin (TEPA), Pentaethylenhexamin (PEHA), 1,3-Benzoldimethanamin (m-Xylylendiamin, mXDA), 1,4-Benzoldimethanamin (p-Xylylendiamin, pXDA), 5-(Aminomethyl)bicyclo[[2.2.1]hept-2-yl]methylamin (NBDA, Norbornandiamin), Dimethyldipropylentriamin, Dimethylaminopropyl-aminopropylamin (DMAPAPA), 3-Aminomethyl-3,5,5-trimethylcyclohexylamin (Isophorondiamin (IPDA)), Diaminodicyclohexylmethan (PACM), Diethylmethylbenzoldiamin (DETDA), 4,4'-Diaminodiphenylsulfon (Dapson), gemischte polycyclische Amine (MPCA) (z.B. Ancamine 2168), Dimethyldiaminodicyclohexylmethan (Laromin C260), 2,2-Bis(4-aminocyclohexyl)propan, $(3(4),8(9)$Bis(aminomethyldicyclo[5.2.1.0$^{2,6}$]decan (Isomerengemisch, tricyclischer primärer Amine; TCD-Diamin), 4-Methylcyclohexyl-diamin (mCDA), N,N'-Diaminopropyl-2-methyl-cyclohexan-1,3-diamin, N,N'-Diaminopropyl-4-methyl-cyclohexan-1,3-diamin, N-(3-Aminopropyl)cyclohexylamin, und 2-(2,2,6,6-tetramethylpiperidin-4-yl)propan-1,3-diamin.

Bevorzugte Amine in der Härterkomponente sind Polyamine, wie 2-Methylpentandiamin (DYTEK A), 3-Aminomethyl-3, 5,5-trimethylcyclohexan (IPDA), 1,3-Benzoldimethanamin (m-Xylylendiamin, mXDA), 4,4'-Methylenbis(cyclohexyl-amin) (PACM), 1,4-Benzoldimethanamin (p-Xylylendiamin, PXDA), 1,6-Diamino-2,2,4-trimethylhexan (TMD), Diethylentriamin (DETA), Triethylentetramin (TETA), Tetraethylenpentamin (TEPA), Pentaethylenhexamin (PEHA), N-Ethylaminopiperazin (N-EAP), $(3(4),8(9)$Bis(aminomethyl)dicyclo[5. 2.1.0$^{2,6}$]decan (Isomerengemisch, tricyclischer primärer Amine; TCD-Diamin), 1,14-Diamino-4,11-dioxatetradecan, Dipropylentriamin, 2-Methyl-1, 5-pentandiamin, N, N'-Dicyclohexyl-1, 6-hexandiamin, N, N'-Dimethyl-1, 3-diaminopropan, N, N'-Diethyl-1, 3-diaminopropan, N, N-Dimethyl-1, 3-diaminopropan, sekundäre Polyoxypropylendi- und triamine, 2,5-Diamino-2, 5-dimethylhexan, Bis(amino-methyl)tricyclopentadien, 1,8-Diamino-p-menthan, Bis-(4-amino-3,5-dimethylcyclohexyl)methan, 1,3-Bis(aminomethyl)cyclohexan (1,3-BAC), 1,2-Bis(aminomethyl)cyclohexan (1,2-BAC), Dipentylamin, N-2-(Aminoethyl)piperazin (N-AEP), N-3-(Aminopropyl)piperazin, Piperazin und Methylcyclohexyl-diamin (mCDA), N,N'-Diaminopropyl-2-methyl-cyclohexan-1,3-diamin, N,N'-Diaminopropyl-4-methyl-cyclohexan-1,3-diamin, N-(3-Aminopropyl)cyclohexylamin, und 2-(2,2,6,6-tetramethylpiperidin-4-yl)propan-1,3-diamin.

Bevorzugt ist das gegenüber Epoxidgruppen reaktive Amin ausgewählt ist aus 3-Aminomethyl-3,5,5-trimethylcyclohexan (IPDA), 2-Methyl-1,5-pentandiamin (DYTEK A), m-Xylylendiamin (mXDA), 1,3-Bis(aminomethyl)-cyclohexan (1,3-BAC), 1,2-Bis(aminomethyl)cyclohexan (1,2-BAC), 4,4'-Methylenbis(cyclohexyl-amin) (PACM), 4-Methylcyclohexyl-diamin (mCDA) sowie Mischungen daraus. Ganz besonders wird das Salz (S) in einer Härterkomponente verwendet, die Aminomethyl-3,5,5-trimethylcyclohexan umfasst.

Die Amine können sowohl einzeln als auch im Gemisch von zwei oder mehreren der genannten Amine eingesetzt werden.

Das gegenüber Epoxidgruppen reaktive Amin ist in der Härterkomponente bevorzugt in einem Anteil von 10 bis 90 Gew.-%, besonders bevorzugt 35 bis 60 Gew.-% bezogen auf das Gesamtgewicht der Härterkomponente enthalten.

Die Härterkomponente kann weitere Additive aus der Gruppe der Lösemittel, weitere phenolische Beschleuniger, Co-Beschleuniger, Haftvermittler und anorganischen Füllstoffe umfassen.

Nicht reaktive Verdünnungsmittel (Lösungsmittel) können vorzugsweise in einer Menge bis zu 30 Gew.-% enthalten sein, bezogen auf das Gesamtgewicht der Härterkomponente, beispielsweise von 1 bis 20 Gew.-%. Beispiele für geeignete Lösungsmittel sind Alkohole, wie Methanol, Ethanol oder Glycole, Niederalkylketone wie Aceton, Diniederalkylniederalkanoylamide wie Dimethylacetamid, Niederalkylbenzole wie Xylole oder Toluol, Phthalsäureester oder Paraffine. Vorzugsweise liegt die Menge an Lösungsmitteln bei ≤ 5 Gew.-% bezogen auf das Gesamtgewicht der Härterkomponente.

Die phenolischen Beschleuniger sind vorzugsweise ausgewählt aus Salicylsäure, styrolysierten Phenolen und Cardanol, sowie Mischungen davon. Diese können in einem Anteil von 0 bis 10 Gew.-% in der Härterkomponente vorliegen, bezogen auf das Gesamtgewicht der Härterkomponente.

Als Co-Beschleuniger können beispielsweise Benzylalkohol, tertiäre Amine, Novolakharze, Imidazole oder tertiäre Aminophenole, Organophosphine, Lewis-Basen oder -Säuren wie Phosphorsäureester, oder Gemische von zwei oder mehr davon verwendet werden. Bevorzugt sind die Co-Beschleuniger in der Härterkomponente in einem Gewichtsanteil von 0,001 bis 5 Gew.-% enthalten, bezogen auf das Gesamtgewicht der Härterkomponente.

Beispiele für geeignete Co-Beschleuniger sind insbesondere Tris-2,4,6-dimethylaminomethylphenol, 2,4,6-Tris(dimethylamino)phenol und Bis[(dimethylamino)methyl]phenol. Ein geeignetes Co-Beschleunigergemisch enthält 2,4,6-Tris(dimethylaminomethyl)phenol und Bis(dimethylaminomethyl)phenol. Solche Gemische sind kommerziell erhältlich, beispielsweise als Ancamine® K54 (Evonik, Deutschland).

Durch den Einsatz eines Haftvermittlers wird die Vernetzung der Bohrlochwand mit der Mörtelmasse verbessert, so dass sich die Haftung im ausgehärteten Zustand erhöht. Geeignete Haftvermittler sind aus der Gruppe der Silane ausgewählt, die mindestens eine Si-gebundene hydrolisierbare Gruppe aufweisen, wie beispielsweise 3-Glycidoxypropyltrimethoxysilan, 3-Glycidoxypropyltriethoxysilan, 2-(3,4-Epoxycyclohexyl)ethyltrimethoxysilan, N-2-(Aminoethyl)-3-aminopropylmethyldiethoxysilan, N-2-(Aminoethyl)-3-aminopropyl-triethoxysilan, 3-Aminopropyltrimethoxysilan, 3-Aminopropyltriethoxysilan, N-Phenyl-3-aminoethyl-3-aminopropyltrimethoxysilan, 3-Mercaptopropyltrimethoxysilan und 3-Mercaptopropylmethyldimethoxysilan. Als Haftvermittler sind insbesondere 3-Aminopropyl-trimethoxysilan (AMMO), 3-Aminopropyltriethoxysilan (AMEO), 2-Aminoethyl-3-aminopropyl-trimethoxysilan (DAMO) und Trimethoxysilylpropyldiethylentetramin (TRIAMO) bevorzugt. Weitere Silane sind beispielsweise in der EP3000792 A1 beschrieben, deren Inhalt hiermit in die vorliegende Anmeldung mit aufgenommen wird.

Der Haftvermittler kann in einer Menge bis zu 10 Gew.-%, bevorzugt 0,1 bis 5 Gew.-%, weiter bevorzugt 1,0 bis 2,5 Gew.-% bezogen auf das Gesamtgewicht der Härterkomponente enthalten sein.

Als Füllstoffe dienen anorganische Füllstoffe, insbesondere Zemente wie Portlandzement oder Aluminatzement sowie andere hydraulisch abbindende anorganische Stoffe, Quarz, Glas, Korund, Porzellan, Steingut, Schwerspat, Leichtspat, Gips, Talkum und/oder Kreide sowie deren Mischungen. Des Weiteren können auch Verdicker wie pyrogene Kieselsäure als anorganischer Füllstoff verwendet werden. Als Füllstoffe kommen insbesondere nicht oberflächenbehandelte Quarzmehle, Feinquarzmehle und Feinstquarzmehle, wie beispielsweise Millisil W3, Millisil W6, Millisil W8 und Millisil W12, bevorzugt Millisil W12, in Frage. Ferner können silanisierte Quarzmehle, Feinquarzmehle und Feinstquarzmehl eingesetzt werden. Diese sind beispielsweils käuflich unter der Produktserie Silbond der Firma Quarzwerke erhältlich. Hierbei sind die Produktserien Silbond EST (Epoxysilanmodifiziert) und Silbond AST (aminosilanbehandelt) besonders bevorzugt. Ferner können Aluminiumoxid basierte Füllstoffe wie beispielsweise Aluminiumoxidfeinstfüller vom Typ ASFP der Firma Denka, Japan, ($d_{50}$ = 0,3 $\mu$m) oder Qualitäten wie DAW oder DAM mit den Typenbezeichnungen 45 ($d_{50}$ < 0,44 $\mu$m), 07 ($d_{50}$ > 8,4$\mu$m), 05 ($d_{50}$ < 5,5 $\mu$m), 03 ($d_{50}$ < 4,1$\mu$m). Weiterhin können oberflächenbehandelte Fein- und Feinstfüllstoffe vom Typ Aktisil AM (aminosilanbehandelt, $d_{50}$ = 2,2 $\mu$m) und Aktisil EM (epoxysilanbehandelt, d50=2,2 $\mu$m) von Hoffman Mineral verwendet werden.

Die anorganischen Füllstoffe können in Form von Sanden, Mehlen oder Formkörpern, vorzugsweise in Form von Fasern oder Kugeln, zugesetzt werden. Die Füllstoffe können in einer oder in allen Komponenten der Mehrkomponenten-Mörtelmasse vorhanden sein. Durch eine geeignete Auswahl der Füllstoffe hinsichtlich Art und Korngrößenverteilung/(Faser)länge können applikationsrelevante Eigenschaften, wie rheologisches Verhalten, Auspresskräfte, innere Festigkeit, Zugfestigkeit, Auszugskräfte und Schlagzähigkeit gesteuert werden.

Der Anteil an Füllstoffen beträgt vorzugsweise 0 bis 75 Gew.-%, beispielsweise 10 bis 75 Gew.-%, bevorzugt 15 bis 75 Gew.-% und weiter bevorzugt 20 bis 50 Gew.-%, noch weiter bevorzugt 25 bis 40 Gew.-%, bezogen auf das Gesamtgewicht der Härterkomponente.

Die Epoxidharzkomponente (A) umfasst vorzugsweise wenigstens ein härtbares Epoxidharz. Als härtbares Epoxid in der Epoxidharzkomponente (A) kommt eine Vielzahl der hierfür dem Fachmann bekannten und kommerziell erhältlichen Verbindungen in Betracht, die im Mittel mehr als eine Epoxid-Gruppe, vorzugsweise zwei EpoxidGruppen, pro Molekül enthalten. Diese Epoxidharze können sowohl gesättigt als auch ungesättigt sowie aliphatisch, alicyclisch, aromatisch oder heterocyclisch sein und auch Hydroxylgruppen aufweisen. Sie können weiterhin solche Substituenten enthalten, die unter den Mischungs- oder Reaktionsbedingungen keine störenden Nebenreaktionen verursachen, beispielsweise Alkyl- oder Arylsubstituenten, Ethergruppen und ähnliche. Im Rahmen der Erfindung sind auch trimere und tetramere Epoxide geeignet.

Vorzugsweise handelt es sich bei den Epoxidharzen um Glycidylether, die sich von mehrwertigen Alkoholen, insbesondere von mehrwertigen Phenolen wie beispielsweise Bisphenolen und Novolaken, ableiten, insbesondere solchen mit einer durchschnittlichen Glycidylgruppenfunktionalität von 1,5 oder größer, insbesondere von 2 oder größer, beispielsweise von 2 bis 10.

Die Epoxidharze können ein Epoxyäquivalentgewicht (EEW) von 120 bis 2000 g/EQ aufweisen, vorzugsweise von 140 bis 400, insbesondere 155 bis 195, beispielsweise 165 bis 185 aufweisen. Es können auch Mischungen mehrerer Epoxidharze verwendet werden.

Beispiele für die zur Herstellung der Epoxidharze eingesetzten mehrwertige Phenole sind Resorcin, Hydrochinon, 2,2-Bis-(4-Hydroxyphenyl)-propan (Bisphenol A), Isomerengemische des Dihydroxyphenylmethans (Bisphenol F), Tetrabrom-Bisphenol A, Novolake, 4,4'-Dihydroxyphenylcyclohexan und 4,4'-Dihydroxy-3,3'-dimethyldiphenylpropan.

Bevorzugt ist das Epoxidharz ein Diglycidylether von Bisphenol A oder von Bisphenol F oder einem Gemisch davon. Besonders bevorzugt werden flüssige Diglycidylether auf Basis von Bisphenol A und/oder F mit einem EEW von 180 bis 190 g/EQ verwendet.

Weitere Beispiele sind Hexandioldiglycidylether, Trimethylolpropan-triglycidylether, Bisphenol-A-Epichlorhydrinharze und/oder Bisphenol-F-Epichlorhydrinharze, beispielsweise mit einem durchschnittlichen Molekulargewicht von Mn $\leq$ 2000 g/mol.

Der Anteil an Epoxidharz beträgt >0 bis 100 Gew.-%, bevorzugt 10 bis 70 Gew.-% und besonders bevorzugt 30 bis 60 Gew.-%, bezogen auf das Gesamtgewicht der Epoxidharzkomponente (A).

Neben den Epoxidharzen kann die Epoxidharzkomponente (A) wahlweise mindestens einen Reaktivverdünner enthalten. Als Reaktivverdünner werden Glycidylether von aliphatischen, alicyclischen oder aromatischen Mono- oder insbesondere Polyalkoholen verwendet, die eine geringere Viskosität als aromatische Gruppen enthaltende Epoxide aufweisen. Beispiele für Reaktivverdünner sind Monoglycidylether, z.B. o-Kresylglycidylether, und Glycidylether mit einer Epoxid-Funktionalität von mindestens 2, wie 1,4-Butandioldiglycidylether (BDDGE), Cyclohexandimethanoldiglycidylether und Hexandioldiglycidylether, sowie Tri- oder höhere Glycidylether, wie Glycerintriglycidylether, Pentaerythrittetraglycidylether, Trimethylolpropantriglycidylether (TMPTGE) oder Trimethylolethantriglycidylether (TMETGE), wobei Trimethylolethantriglycidylether bevorzugt ist. Es können auch Mischungen von zwei oder mehr dieser Reaktivverdünner verwendet werden, vorzugsweise Triglycidylether enthaltende Mischungen, besonders bevorzugt als Gemisch aus 1,4-Butandioldiglycidylether (BDDGE) und Trimethylolpropantriglycidylether (TMPTGE) oder 1,4-Butandioldiglycidylether (BDDGE) und Trimethylolethantriglycidylether (TMETGE).

Die Reaktivverdünner liegen bevorzugt in einer Menge von 0 bis 60 Gew.-% vor, insbesondere von 1 bis 20 Gew.-%, bezogen auf das Gesamtgewicht der Harzkomponente (A).

Der Anteil der Epoxidkomponente (A) an der Gesamtmasse der Mehrkomponenten-Mörtelmasse beträgt vorzugsweise 5 bis 90 Gew.-%, insbesondere 20 bis 80 Gew.-%, 30 bis 70 Gew.-% oder 40 bis 60 Gew.-%.

Geeignete Epoxidharze und Reaktivverdünner sind auch in dem Standardwerk von Michael Dornbusch, Ulrich Christ und Rob Rasing, "Epoxidharze", Vincentz Network GmbH & Co KG (2015), ISBN 13: 9783866308770, zu finden. Diese Verbindungen werden hier durch Bezugnahme aufgenommen.

Des Weiteren kann die Epoxidharzkomponente (A) übliche Zusätze enthalten, insbesondere Haftvermittler und Füllstoffe, wie bereits für die Härterkomponente beschrieben.

Der Haftvermittler kann in einer Menge bis zu 10 Gew.-%, bevorzugt 0,1 bis 5 Gew.-%, besonders bevorzugt 1,0 bis 5,0 Gew.-%, bezogen auf das Gesamtgewicht der Epoxidharzkomponente (A), enthalten sein.

Der Anteil an Füllstoffen beträgt vorzugsweise 0 bis 75 Gew.-%, beispielsweise 10 bis 75 Gew.-%, bevorzugt 15 bis 75 Gew.-% und weiter bevorzugt 20 bis 50 Gew.-%, noch weiter bevorzugt 25 bis 40 Gew.-%, bezogen auf das Gesamtgewicht der Epoxidharzkomponente (A).

Weitere denkbare Zusätze zur Mehrkomponenten-Epoxidharzmasse sind ferner Thixotropiermittel wie gegebenenfalls organisch nachbehandelte pyrogene Kieselsäure, Bentonite, Alkyl- und Methylcellulosen und Rhizinusölderivate, Weichmacher wie Phthalsäure- oder Sebacinsäureester, Stabilisatoren, Antistatikmittel, Verdickungsmittel, Flexibilisatoren, Härtungskatalysatoren, Rheologiehilfsmittel, Netzmittel, färbende Zusätze wie Farbstoffe oder Pigmente, beispielsweise zum unterschiedlichen Anfärben der Komponenten zur besseren Kontrolle von deren Durchmischung, ebenso wie Netzmittel, Phlegmatisiermittel, Dispergiermittel und weitere Steuerungsmittel für die Reaktionsgeschwindigkeit, oder Gemische von zwei oder mehreren davon.

Die Mehrkomponenten-Epoxidharzmasse liegt vorzugsweise in Patronen, Kartuschen oder Folienbeuteln vor, die zwei oder mehrere voneinander getrennte Kammern umfassen, in welchen die Epoxidharzkomponente (A) und die Härterkomponente (B) der Mörtelmasse reaktionsinhibierend voneinander getrennt angeordnet sind.

Bei der bestimmungsgemäßen Anwendung werden die Epoxidharzkomponente (A) und die Härterkomponente (B) aus den getrennten Kammern entleert und in einer geeigneten Vorrichtung, beispielsweise einem Statikmischer oder einem Dissolver, gemischt. Die Mischung aus Epoxidharzkomponente (A) und Härterkomponente (B) wird danach mittels einer bekannten Injektionsvorrichtung in das zuvor gereinigte Bohrloch eingebracht. Anschließend wird das zu fixierende Bauteil in die Mörtelmasse eingesetzt und justiert. Die reaktiven Bestandteile der Härterkomponente (B) reagieren mit den Epoxidharz der Harzkomponente (A) unter Polyaddition, sodass die Epoxidharzmasse unter Umgebungsbedingungen innerhalb einer gewünschten Zeit, vorzugsweise innerhalb weniger Minuten oder Stunden, aushärtet.

Die Komponenten A und B werden bevorzugt in einem Verhältnis gemischt, das entsprechend der EEW- und AHEW-Werte eine ausgeglichene Stöchiometrie ergibt.

Der AHEW-Wert (*amine hydrogen equivalent weight,* H-Äquivalent) gibt die Menge der Härterkomponente an, die 1 mol reaktives H enthält Die Bestimmung des AHEW erfolgt in für den Fachmann bekannter Weise anhand der Formulierung der Reaktionsmischung aus den bekannten H-Äquivalenten der verwendeten Edukte und Rohstoffe, aus denen sie errechnet werden.

Am Beispiel von meta-Xylylendiamin (Mw = 136 g/mol, Funktionalität = 4 eq/mol) ist die Errechnung des AHEW nachfolgend exemplarisch erläutert:

$$\text{Allgemeine Formel: } AHEW = \frac{M_W}{Funktionalit\ddot{a}t} = \frac{136}{4}\left\lfloor\frac{g}{eq}\right\rfloor = 34\left\lfloor\frac{g}{eq}\right\rfloor$$

Die EEW (*epoxide equivalent weight,* Epoxidäquivalentwerte) werden in der Regel von den Herstellern der jeweils verwendeten Epoxidharzkomponenten angegeben oder sie werden nach bekannten Methoden berechnet. Die EEW geben die Menge in g Epoxidharz an, die 1 Mol Epoxidgruppen enthält.

Experimentell wurde die AHEW durch Bestimmung der Glasübergangstemperatur (Tg) einer Mischung aus Epoxidharz (mit bekanntem EEW) und Aminkomponente erhalten. Es wurden dabei die Glasübergangstemperaturen von Epoxidharz/Amin-Mischungen mit unterschiedlichen Verhältnissen bestimmt. Die Probe wurde mit einer Heizrate von -20 K/min von 21 auf -70°C abgekühlt, in einem ersten Heizlauf auf 250°C erwärmt (Heizrate 10 K/min), anschließend wieder auf -70°C gekühlt (Heizrate -20 K/min) und im letzten Schritt auf 200°C erwärmt (20 K/min). Die Mischung mit der höchsten Glasübergangstemperatur im zweiten Heizlauf ("$T_g2$") besitzt das optimale Verhältnis von Epoxidharz und Amin. Aus dem bekannten EEW und dem optimalen Epoxidharz/Amin-Verhältnis lässt sich der AHEW-Wert berechnen. Beispiel: EEW = 158 g/mol

Mischung Amin/Epoxidharz mit maximaler $T_g2$: 1 g Amin mit 4,65 g Epoxidharz

$$AHEW = \frac{1}{4,65} \cdot 158 = 34 \left[\frac{g}{eq}\right]$$

Ein weiterer Gegenstand der vorliegenden Erfindung ist ein Verfahren zur chemischen Befestigung von Konstruktionselementen und/oder Verankerungsmittelsn in Bohrlöchern, wobei zur chemischen Befestigung der Konstruktionselemente eine Mehrkomponenten-Epoxidharzmasse wie zuvor beschrieben verwendet wird. Das erfindungsgemäße Verfahren eignet sich insbesondere zum Baukleben von Beton/Beton, Stahl/Beton oder Stahl/Stahl oder einer der genannten Materialien auf anderen mineralischen Materialien, die strukturelle Verstärkung von Bauteilen aus Beton, Mauerwerk und anderen mineralischen Materialien, die Armierungsanwendungen mit faserverstärkten Polymeren von Bauobjekten, die chemische Befestigung auf Oberflächen aus Beton, Stahl oder anderen mineralischen Materialien, insbesondere die chemische Befestigung von Konstruktionselementen und Verankerungsmitteln, wie Ankerstangen, Ankerbolzen, (Gewinde)stangen,

(Gewinde)hülsen, Betoneisen, Schrauben und dergleichen, in Bohrlöchern in verschiedenen Untergründen, wie (Stahl)beton, Mauerwerk, anderen mineralischen Materialien, Metallen (z.B. Stahl), Keramiken, Kunststoffen, Glas und Holz. Ganz besonders bevorzugt dient das erfindungsgemäße Verfahren zur chemischen Befestigung von Verankerungsmitteln.

Soweit anwendbar, gelten die vorstehenden Ausführungen zur erfindungsgemäßen Verwendung gleichermaßen für das erfindungsgemäße Verfahren.

Weitere Vorteile der Erfindung ergeben sich aus der nachfolgenden Beschreibung von bevorzugten Ausführungsbeispielen, die jedoch in keiner Weise als einschränkend zu verstehen sind. Alle Ausführungsformen der Erfindung können im Rahmen der Erfindung miteinander kombiniert werden.

## AUSFÜHRUNGSBEISPIELE

Zur Darstellung der Ausführungsbeispiele wurden die in der nachstehenden Tabelle 1 aufgeführten Chemikalien verwendet:

**Tabelle 1:** Liste der verwendeten Chemikalien

| Stoff | Handelsname | CAS-Nummer | Hersteller | Land |
|---|---|---|---|---|
| 1,2,3-Propantriol | Glycerin | 56-81-5 | Merck | D |
| 1,2-Diaminocyclohexan | Dytek DCH-99 | 694-83-7 | Invista | NL |
| 1,3-Cyclohexandimethanamin | 1,3-BAC | 2579-20-6 | Itochu Deutschland | D |
| 1,3-Dihydroxybenzol | Resorcin | 108-46-3 | Sigma-Aldrich | D |
| 2,4,6-Tris(dimethylaminomethyl)phenol, Bis[(dimethylamino)methyl]phenol | Ancamine K54 | 90-72-2, 71074-89-0 | Air Products | NL |
| 2-Methyl-1,5-pentamethylendiamin | Dytek A | 15520-10-2 | Invista | NL |
| 4,4'-Methylenbis(2-methylcyclohexylamin) | MACM | 6864-37-5 | Sigma-Aldrich | D |

(fortgesetzt)

| Stoff | Handelsname | CAS-Nummer | Hersteller | Land |
|---|---|---|---|---|
| Aluminiumnitrat-Nonahydrat | Aluminiumnitrat | 7784-27-2 | Sigma-Aldrich | D |
| Ammoniumnitrat | Ammoniumnitrat | 6484-52-2 | Sigma-Aldrich | D |
| Calciumcarbonat | Calciumcarbonat | 471-34-1 | Sigma-Aldrich | D |
| Calciumnitrat-Tetrahydrat | Calciumnitrat | 13477-34-4 | Sigma-Aldrich | D |
| Calciumnitrit-Lösung, 30 % | Calciumnitrit-Lösung, 30 % in Wasser | 13780-06-8 | Sigma-Aldrich | D |
| Calciumoxid | Calciumoxid | 1305-78-8 | Sigma-Aldrich | D |
| Calciumpropionat | Calciumpropionat | 4075-81-4 | Sigma-Aldrich | D |
| Calciumsulfat-Dihydrat | Calciumsulfat-Dihydrat 75 | 10101-41-1 | Hilliges Gipswerk | D |
| Calciumtrifluoromethansulfonat | Calciumtriflat | 55120-75-7 | Sigma-Aldrich | D |
| Isophorondiamin | Vestamin IPD | 2855-13-2 | Evonik Degussa | D |
| Kaliumnitrat | Kaliumnitrat | 7757-79-1 | Sigma-Aldrich | D |
| Kaliumsulfat | Kaliumsulfat | 7778-80-5 | Sigma-Aldrich | D |
| Lithiumhydroxid | Lithiumhydroxid | 1310-65-2 | Sigma-Aldrich | D |
| Lithiumtrifluoromethansulfonat | Lithiumtriflat | 33454-82-9 | TCI Europe | B |
| Magnesiumnitrat | Magnesiumnitrat-Hexahydrat | 13446-18-9 | Sigma-Aldrich | D |
| Magnesiumtrifluoromethansulfonat | Magnesiumtriflat | 60871-83-2 | Alfa Aesar | D |
| m-Xylylendiamin | mXDA | 1477-55-0 | Itochu Deutschland | D |
| Natriumbromid | Natriumbromid | 7647-15-6 | Sigma-Aldrich | D |
| Natriumchlorid | Natriumchlorid | 7647-14-5 | VWR Prolabo | D |
| Natriumiodid | Natriumiodid | 7681-82-5 | Sigma-Aldrich | D |
| Natriumnitrat | Chile-Salpeter | 7631-99-4 | Sigma-Aldrich | D |
| 4-Hydroxyphenylessigsäure | 4-Hydroxyphenylessigsäure | 156-38-7 | TCI Europe | B |
| Phenol-Novolakharz | Phenolite TD-2131 | 9003-35-4 | DIC Europe | D |

(fortgesetzt)

| Stoff | Handelsname | CAS-Nummer | Hersteller | Land |
|---|---|---|---|---|
| p-Toluolsulfonsäure-Monohydrat | p-Toluolsulfonsäure | 6192-52-5 | TCI Europe | B |
| Salicylsäure | Salicylsäure | 69-72-7 | Merck | D |
| Salpetersäure 70% | Salpetersäure | 7697-37-2 | Sigma-Aldrich | D |
| Styrolisiertes Phenol | Novares LS 500 | 61788-44-1 | Rütgers Novares GmbH | D |
| Tetrabutylammoniumnitrat | Tetrabutylammoniumnitrat | 1941-27-1 | Sigma-Aldrich | D |
| Trifluoressigsäure | Trifluoressigsäure | 76-05-1 | TCI Europe | B |

## 1. Bestimmung der Reaktionskinetik durch Temperaturmessung

**Epoxidharzkomponente (A)**

Als Epoxidharze wurden in den Beispielen die im Handel unter den Bezeichnungen Araldite GY 240 und Araldite GY 282 (Huntsman) erhältlichen Bisphenol A-basierten beziehungsweise Bisphenol F-basierten Epoxidharze verwendet.

Als Reaktivverdünner wurden die im Handel unter den Bezeichnungen Araldite DY-026 und AralditeTM DY-T (Huntsman) erhältlichen 1,4-Butandiol-diglycidylether und Trimethyolpropan-triglycidylether verwendet.

Es wurde eine Epoxidharzkomponente (A) mit der in der nachfolgenden Tabelle 2 angegebenen Zusammensetzung hergestellt. Die Komponenten wurden gemischt und im Dissolver (PC Laborsystem, Volumen 1L) bei einem Unterdruck von 80 mbar 10 min lang bei 3500 U/min gerührt.

**Tabelle 2:** Zusammensetzung Epoxidharzkomponente (A)

| Stoff | Funktion | Gewichtsprozent |
|---|---|---|
| Bisphenol A-basiertes Epoxidharz | Epoxidharz | 52 |
| Bisphenol F-basiertes Epoxidharz | Epoxidharz | 28 |
| 1,4-Butanediol-diglycidyl ether | Reaktivverdünner | 10 |
| Trimethyolpropan-triglycidylether | Reaktivverdünner | 10 |
| | | |
| EEW [g/Eq] | | 158 |

**Härterkomponente (B)**

Als Härterkomponente (B) wurde das Amin Isophorondiamin (IPDA, Handelsname Vestamin IPD) der Firma Evonik Degussa, Deutschland eingesetzt. Zur Herstellung der Härterkomponente (B) wurde die in der Tabelle 3 angegebene Menge an Salz (S) zu IPDA hinzugegeben und soweit wie möglich gelöst. Dieses Gemisch wurde als Härterkomponente eingesetzt. Die Mischverhältnisse wurden basierend auf dem AHEW-Gehalts von IPDA (42,6 g/EQ), dem Gehalt an Beschleuniger und dem EEW-Gehalt der Epoxidharzkomponente (A) berechnet.

Zur Bestimmung der Reaktionskinetik durch Temperaturmessung wurde die Epoxidharzkomponente (A) jeweils mit der Härterkomponente in ein 20 ml Rollrandglas gefüllt. Es wurde ein Temperaturfühler mittig im Rollrandglas platziert. Die Temperaturänderung wurde aufgezeichnet (Gerät: Yokogawa, DAQ-Station, Model: DX1006-3-4-2). Die Aushärtung des Mörtels konnte durch diese Methode über den Zeitverlauf der Temperaturentwicklung verfolgt werden. Fand eine Beschleunigung bei der Aushärtung statt, ist das Temperaturmaximum zu kürzeren Zeiten hin verschoben, verbunden mit einer höheren Temperatur. Es wurden $T_{max}$ (erreichtes Temperaturmaximum) und $t_{Tmax}$ (Zeit, nach der das Temperaturmaximum erreicht wurde) gemessen.

Die Ergebnisse der Bestimmung der Reaktionskinetik durch Temperaturmessung für unterschiedliche Salze (S) als Beschleuniger sind in der nachstehenden Tabelle 3 aufgeführt.

**Tabelle 3:** Ergebnisse der Bestimmung der Reaktionskinetik

| Salz (S) | Anteil [Gew.-%] | $T_{max}$ [°C] | $t_{max}$ [hh:mm:ss] |
|---|---|---|---|
| Calciumnitrat-Tetrahydrat | 2 | 193 | 00:29:13 |
| | 5 | 189 | 00:12:34 |
| Calciumnitrat-Tetrahydrat/Ancamin K54 | 2/2 | 85 | 00:19:05 |
| Caciumnitrat-Tetrahydrat/Calciumtriflat/ Ancamin K54 | 2/2/2 | 111 | 00:07:34 |
| Calciumnitrat/Salpetersäure-Lösung | 2 | 159 | 00:20:26 |
| | 5 | 176 | 00:09:32 |
| Kaliumnitrat (25,0 % in $H_2O$) | 8 | 153,2 | 00:43:50 |
| | 20 | 145,8 | 00:19:25 |
| Natriumnitrat (46,6 % in $H_2O$) | 4,3 | 125,2 | 01:10:58 |
| | 10,7 | 135,1 | 00:38:06 |
| Magnesiumnitrat-Hexahydrat | 2 | 36 | 01:12:52 |
| | 5 | 152 | 00:38:21 |
| Aluminiumnitrat-Nonahydrat | 2 | 55 | 01:11:33 |
| | 5 | 169 | 00:38:52 |
| Ammoniumnitrat | 2 | 173,3 | 00:39:11 |
| | 5 | 195,9 | 00:19:40 |
| Calciumnitrit (30,0 % in $H_2O$) | 6,7 | 207 | 00:12:53 |
| | 16,7 | 164,7 | 00:06:41 |
| Natriumchlorid (26,4 % in $H_2O$) | 7,6 | 130 | 00:43:56 |
| | 18,9 | 157,7 | 00:27:29 |
| Nathumbromid (47,56 % in $H_2O$) | 4,2 | 157,2 | 00:47:22 |
| | 10,5 | 145,8 | 00:29:37 |
| Natriumiodid | 2 | 135 | 01:13:03 |
| | 5 | 152 | 00:24:46 |
| Calciumtriflat | 2 | 212 | 00:21:49 |
| | 5 | 230 | 00:07:05 |
| Calciumtriflat/Ancamine K54 | 2/2 | 141 | 00:16:53 |
| Magnesiumtriflat | 2 | 46,2 | 02:34:25 |
| | 5 | 100,5 | 01:35:59 |
| Lithiumtriflat | 2 | 183,5 | 00:34:48 |
| | 5 | 222,6 | 00:14:56 |

Zum Vergleich wurde die Reaktionskinetik durch Temperaturmessung für zahlreiche Beschleuniger, die aus dem Stand der Technik bekannt sind, durchgeführt. Die Ergebnisse dieser Messung sind in der nachstehenden Tabelle 4 aufgeführt.

**Tabelle 4:** Ergebnisse der Bestimmung der Reaktionskinetik durch Temperaturmessung für unterschiedliche Beschleuniger (Vergleichsbeispiele)

| Beschleuniger | Konzentration [Gew.-%] | $T_{max}$ [°C] | $t_{max}$ [hh:mm:ss] |
|---|---|---|---|
| -- | | 36,8 | 02:17:03 |
| $H_2O$ | 5 | 65,5 | 01:18:12 |
| | 10 | 86,8 | 00:36:45 |
| Resorcin | 10 | 81 | 01:18:20 |
| | 20 | 172 | 00:27:48 |
| Glycerin | 5 | 24 | 04:55:38 |
| | 10 | 32 | 02:15:26 |
| Calciumoxid | 2 | 23 | 05:04:05 |
| | 5 | 27 | 00:51:02 |
| Phenolessigsäure | 5 | 28 | 00:23:14 |
| | 10 | 23 | 00:16:37 |
| Styrolisiertes Phenol 'LS 500' | 10 | 27 | 03:06:47 |
| | 20 | 29 | 02:28:30 |
| p-Toluolsulfonsäure | 2 | 26 | 03:02:25 |
| | 5 | 25 | 03:04:48 |
| Ancamin K54 | 2 | 25 | 03:57:52 |
| | 5 | 24 | 05:34:45 |
| Salicylsäure | 2 | 32 | 01:16:25 |
| | 5 | 36 | 01:30:38 |
| Phenolite TD-2131 | 15 | 165 | 00:54:23 |
| | 25 | 147 | 00:38:37 |
| Trifluoressigsäure | 2 | 31 | 01:47:13 |
| | 5 | 73 | 01:22:20 |
| Lithiumhydroxid | 2 | 23 | 00:17:00 |
| | 5 | 23 | 05:21:27 |
| Kaliumsulfat | 2 | 45,4 | 03:07:59 |
| | 5 | 46,8 | 02:29:52 |
| Calciumsulfat | 2 | 25 | 05:14:48 |
| | 5 | 24 | 04:41:34 |
| Calciumpropionat | 2 | 36,5 | 03:26:25 |
| | 5 | 41,5 | 03:22:06 |
| Tetrabutylammoniumnitrat | 2 | 43 | 02:21:04 |
| | 5 | 38 | 02:27:56 |
| Kaliumsulfat (10,02 % in $H_2O$) | 20,0 | 136,9 | 00:17:50 |
| | 49,9 | 98,2 | 00:12:12 |

Variation des Amins in der Härterkomponente

Die Härterkomponente (B) wurde dahingehend modifiziert, dass das Amin IPDA durch die in der nachstehenden Tabelle 5 aufgeführten Amine ausgetauscht wurde und mit den jeweilig angegebenen Salzen (S) kombiniert wurde. Die Ergebnisse der Bestimmung der Reaktionskinetik durch Temperaturmessung sind in den nachstehenden Tabellen 5 (erfindungsgemäß) und 6 (Vergleichsbeispiele) angegeben.

**Tabelle 5:** Ergebnisse der Bestimmung der Reaktionskinetik durch Temperaturmessung bei Variation der des Amins in der Härterkomponente

| Amin | Salz (S) | Anteil [Gew.-%] | $T_{max}$ [°C] | $t_{max}$ [hh:mm:ss] |
|---|---|---|---|---|
| 1,3-BAC | Calciumnitrat-Tetrahydrat | 2 | 165 | 00:11:45 |
| 1,3-BAC | Calciumnitrat-Tetrahydrat in Glycerin (80%ige Lösung) | 2,5 | 257,5 | 00:13:20 |
| MACM | Calciumnitrat-Tetrahydrat | 2 | 61 | 00:55:29 |
| Dytek A | Calciumnitrat-Tetrahydrat in Glycerin (80%ige Lösung) | 2,5 | 226,5 | 00:15:32 |
| 1,2-BAC | Calciumtriflat | 2 | 146,5 | 01:14:13 |
| mXDA | Natriumiodid in Glycerin (36,4%ige Lösung) | 5,5 | 239,0 | 00:40:52 |

**Tabelle 6:** Ergebnisse der Bestimmung der Reaktionskinetik durch Temperaturmessung bei Variation der des Amins in der Härterkomponente unter Verwendung eines Novolak-Beschleunigers

| Amine | Beschleuniger | Konzentration [%] | Tmax [°C] | $t_{max}$ [hh:mm:ss] |
|---|---|---|---|---|
| 1,3-BAC | -- | | 33 | 03:08:35 |
| MACM | -- | | 22 | 03:12:37 |
| MACM | Phenolite TD-2131 | 15 | 50 | 01:20:40 |
| Dytek A | Phenolite TD-2131 | 15 | 222,7 | 00:33:17 |
| 1,2-BAC | Phenolite TD-2131 | 15 | 57,1 | 01:25:53 |
| 1,3-BAC | Phenolite TD-2131 | 15 | 209,5 | 00:25:07 |
| mXDA | Phenolite TD-2131 | 15 | 224,9 | 00:38:46 |

## 2. Mörtelmassen und Auszugsversuche

**Epoxidharzkomponente (A)**

Als Epoxidharze wurden in den Beispielen die im Handel unter den Bezeichnungen Araldite GY 240 und Araldite GY 282 (Huntsman) erhältlichen Bisphenol A-basierten beziehungsweise Bisphenol F-basierten Epoxidharze verwendet.
Als Reaktivverdünner wurden die im Handel unter den Bezeichnungen Araldite DY-026 und AralditeTM DY-T (Huntsman) erhältlichen 1,4-Butandiol-diglycidylether und Trimethyolpropan-triglycidylether verwendet.
Als Haftvermittler wurde 3-Glycidyloxypropyl-trimethoxysilan erhältlich unter der Bezeichnung Dynalsylan GLYMO™ (Evonik Industries) verwendet.
Die flüssigen Komponenten wurden per Hand vorgemischt. Anschließend wurden als Füllstoff Quarz (Millisil™ W12 der Firma Quarzwerke Frechen) und als Verdicker pyrogene Kieselsäure (Cab-O-Sil™ TS- 720 der Firma Cabot Rheinfelden) zugegeben und die Mischung im Dissolver (PC Laborsystem, Volumen 1L) 10 min lang bei einem Unterdruck von 80 mbar bei 3500 U/min gerührt.
Die Zusammensetzung der in den Beispielen verwendeten Epoxidharzkomponente (A) ist in der nachfolgenden Tabelle 7 angegeben.

**Tabelle 7:** Zusammensetzung der Epoxidharzkomponente (A) in Gew.-%

| Stoff | Funktion | Gewichtsprozent [Gew.- %] |
|---|---|---|
| 3-Glycidyloxypropyl-trimethoxsysilan | Haftvermittler | 2,8 |
| Bisphenol A-basiertes Epoxidharz | Epoxidharz | 31,3 |
| Bisphenol F-basiertes Epoxidharz | Epoxidharz | 16,9 |
| 1,4-Butanediol-diglycidylether | Reaktivverdünner | 6,0 |
| Trimethylolpropan-triglycidylether | Reaktivverdünner | 6,0 |
| Quarz | Füllstoff | 34,4 |
| Kieselsäure | Verdicker | 2,7 |
|  |  |  |
| **EEW [g/Eq]** |  | **255** |

**Härterkomponente (B)**

Ausgangsmaterialien

Als Amine wurden Isophorondiamin (IPDA) der Firma Evonik Degussa, Deutschland, 1,3-Cyclohexandimethanamin (1,3-BAC), m-Xylylendiamin (mXDA) der Firma MGC, Japan, sowie 2-Methlypentamethylendiamin (Dytek A) der Firma Invista, Niederlande, zur Herstellung der Härterkomponente (B) verwendet.

Als Füllstoff wurde Quarz (Millisil™ W12 der Firma Quarzwerke Frechen) sowie Calciumaluminatzement (Secar 80 der Firma Kerneos SA) und als Verdicker pyrogene Kieselsäure (Cab-O-Sil™ TS-720 der Firma Cabot Rheinfelden) verwendet.

Die Salze Calciumnitrat und Natriumiodid wurden als Lösungen in Glycerin (1,2,3-Propantriol, CAS-Nr. 56-81-5, Merck, D) eingesetzt. Zur Herstellung der Calciumnitrat-Lösung wurden 400,0g Calciumnitrat-Tetrahydrat zu 100,0 g Glycerin gegeben und bei 50 °C bis zur vollständigen Lösung gerührt (ca. 3 Stunden). Die so hergestellte Lösung enthielt 80,0 % Calciumnitrat-Tetrahydrat. Zur Herstellung der Natriumiodid-Lösung wurden 36,4 g Natriumiodid zu 63,6 Glycerin gegeben und bei 50 °C bis zur vollständigen Lösung gerührt. Die so hergestellte Lösung enthielt 36,4 % Natriumiodid.

Calciumtriflat wurde als Feststoff im Amin des jeweiligen Härters gelöst.

Weiterhin wurde ein Calciumnitrat/Salpetersäure-Lösung als Salz (S) eingesetzt. Zur Herstellung dieser Lösung wurden 52,6 g Calciumcarbonat langsam zu 135,2 g Salpetersäure gegeben und anschließend 5 min gerührt.

Zur Herstellung der Härterkomponenten (B) wurden die flüssigen Komponenten gemischt. Der Beschleuniger wurde hinzugegeben und anschließend wurden Quarzmehl und Kieselsäure zugegeben und im Dissolver (PC Laborsystem, Volumen 1L) bei einem Unterdruck von 80 mbar bei 2500 U/min für 10 min gerührt.

Die Zusammensetzung der so hergestellten Härterkomponenten (B) ist in den nachfolgenden Tabellen 8 (erfindungsgemäß) und 9 (Vergleichsbeispiele) angegeben:

**Tabelle 8:** Zusammensetzung der Härterkomponente (B) in Gew.-%

| | Beispiel | 1 | 2 | 3 | 4 |
|---|---|---|---|---|---|
| Amin | 1,3-BAC | 36,75 | - | - | - |
| | mXDA | - | 41,2 | - | - |
| | IPDA | - | - | 42,0 | - |
| | DYTEK A | - | - | - | 42,0 |
| Beschleuniger | Natriumiodid | 8,25 | - | - | - |
| | Calciumnitrat | - | 3,8 | - | - |
| | Calciumnitrat/Salpetersäure | - | - | 3,0 | - |
| | Calciumtriflat | - | - | - | 3,0 |
| | Quarz | 25,0 | 25,0 | 25,0 | 25,0 |
| | Calciumaluminatzement | 25,0 | 25,0 | 25,0 | 25,0 |
| | Verdicker | 5,0 | 5,0 | 5,0 | 5,0 |

(fortgesetzt)

| Beispiel | 1 | 2 | 3 | 4 |
|---|---|---|---|---|
| **AHEW [g/Eq]** | **97** | **83** | **101** | **69** |

**Tabelle 9:** Zusammensetzung der Härterkomponente (B) der Vergleichsbeispiele 1 bis 5 in Gew.-%

| | Beispiel | 1 | 2 | 3 | 4 | 5 |
|---|---|---|---|---|---|---|
| Amin | 1,3-BAC | 36,6 | - | - | - | - |
| | mXDA | - | 36,6 | - | - | - |
| | IPDA | - | - | 27,6 | 36,6 | - |
| | DYTEK A | - | - | - | - | 36,6 |
| Beschleuniger | Phenolite TD-2131 | 6,0 | 6,0 | - | 6,0 | 6,0 |
| | Ancamine K54 | 2,4 | 2,4 | 2,4 | 2,4 | 2,4 |
| | Novares LS 500 | - | - | 15,0 | - | - |
| | Quarz | 25,0 | 25,0 | 25,0 | 25,0 | 25,0 |
| | Calciumaluminatzement | 25,0 | 25,0 | 25,0 | 25,0 | 25,0 |
| | Verdicker | 5,0 | 5,0 | 5,0 | 5,0 | 5,0 |
| | **AHEW [g/Eq]** | **97** | **93** | **154** | **116** | **79** |

## Mörtelmassen und Auszugsversuche

Die Epoxidharzkomponente (A) und die Härterkomponente (B) wurden in einem Speedmixer in einem Verhältnis gemischt, das entsprechend der EEW- und AHEW-Werte eine ausgeglichene Stöchiometrie ergab. Das Gemisch wurde möglichst blasenfrei in eine 1K-Kartusche gefüllt und sofort in das für die Auszugsversuche präparierte Bohrloch injiziert.

Die Auszugsfestigkeit der durch Mischen der Epoxidharzkomponente (A) und Härterkomponente (B) gemäß den oben angegebenen Beispielen erhaltenen Mörtelmassen wurden unter Verwendung einer hochfesten Ankergewindestange M12 gemäß ETAG 001 Part 5 bestimmt, die in ein hammergebohrtes Bohrloch mit einem Durchmesser von 14 mm und einer Bohrlochtiefe von 69 mm mit der jeweiligen Mörtelmasse in C20/25 Beton eingedübelt wurde. Die Bohrlöcher wurden mit Druckluft (2 x 6 bar), einer Drahtbürste (2 x) und anschließend wieder Druckluft (2 x 6 bar) gereinigt.

Die Bohrlöcher wurden vom Bohrgrund her mit der jeweils zu prüfenden Mörtelmasse zu zwei Dritteln befüllt. Die Gewindestange wurde von Hand eingedrückt. Der Mörtelüberschuss wurde mittels eines Spachtels entfernt.

Die Aushärtezeit bei Versuch 1 betrug 4 h bei 25 °C. Bei Versuch 2 betrug die Aushärtezeit 24 Stunden bei 25 °C.

Die Versagenslast wurde durch zentrisches Ausziehen der Ankergewindestange mit enger Abstützung ermittelt. Die mit den Mörtelmassen unter Verwendung einer Härterkomponente (B) gemäß den Beispielen 1 bis 4 und den Vergleichsbeispielen 1 bis 5 erhaltenen Lastwerte sind der folgenden Tabelle 10 zu entnehmen.

**Tabelle 10:** Bestimmung der Lastwerte

| | | Beispiele | | | | Vergleichsbeispiele | | | | |
|---|---|---|---|---|---|---|---|---|---|---|
| | | 1 | 2 | 3 | 4 | 1 | 2 | 3 | 4 | 5 |
| Auszugsversuche | Versuch Nummer | Lastwert [N/mm$^2$] | | | | | | | | |
| Aushärtung 4h | 1 | 31,1 | 29,1 | 7,4 | 24,6 | 25,8 | 18,9 | 1,7 | 0,4 | 17,9 |
| Aushärtung 24h | 2 | 34,4 | 38,8 | 35,5 | 35,0 | 37,3 | 38,2 | 36,5 | 36,8 | 36,1 |

## Patentansprüche

1. Verwendung mindestens eines Salzes (S) ausgewählt aus der Gruppe bestehend aus Salzen der Salpetersäure, Salzen der Salpetrigen Säure, Salzen der Halogene, Salzen der Trifluormethansulfonsäure sowie Kombinationen davon als Beschleuniger in einer Epoxidharzmasse zur chemischen Befestigung.

2. Verwendung gemäß Anspruch 1, **dadurch gekennzeichnet, dass** die Epoxidharzmasse eine Mehrkomponenten-Epoxidharzmasse ist.

3. Verwendung nach Anspruch 2, **dadurch gekennzeichnet, dass** die Mehrkomponenten-Epoxidharzmasse eine Epoxidharzkomponente (A), die wenigstens ein härtbares Epoxidharz enthält, und eine Härterkomponente (B), die mindestens ein gegenüber Epoxidgruppen reaktives Amin enthält, umfasst, wobei die Epoxidharzkomponente (A) und die Härterkomponente (B) reaktionsinhibierend getrennt voneinander vorliegen,

4. Verwendung nach Anspruch 3, **dadurch gekennzeichnet, dass** die Mehrkomponenten-Epoxidharzmasse in Patronen, Kartuschen oder Folienbeuteln vorliegt, die zwei oder mehrere voneinander getrennte Kammern umfassen, in welchen die Epoxidharzkomponente (A) und die Härterkomponente (B) reaktionsinhibierend voneinander getrennt angeordnet sind.

5. Verwendung nach einem der vorhergehenden Ansprüche zur chemischen Befestigung von Konstruktionselementen und Verankerungsmitteln, insbesondere von Ankerstangen, Ankerbolzen, (Gewinde)stangen, (Gewinde)hülsen, Betoneisen, und/oder Schrauben in Bohrlöchern.

6. Verwendung nach einem der vorhergehenden Ansprüche, **dadurch gekennzeichnet, dass** das Salz (S) ausgewählt ist aus der Gruppe bestehend aus Nitrat ($NO_3^-$), Iodid ($I^-$), Triflat ($CF_3SO_3^-$) sowie Mischungen daraus.

7. Verwendung nach einem der vorhergehenden Ansprüche, **dadurch gekennzeichnet, dass** das Salz (S) ein Kation umfasst ausgewählt aus der Gruppe bestehend aus Alkalimetallen, Erdalkalimetallen, Lanthanoiden, Aluminium, Ammonium und Kombinationen davon.

8. Verwendung nach einem der Ansprüche 3 bis 7, **dadurch gekennzeichnet, dass** das gegenüber Epoxidgruppen reaktive Amin ausgewählt ist aus 3-Aminomethyl-3,5,5-trimethylcyclohexan (IPDA), 2-Methyl-1,5-pentandiamin (DYTEK A), m-Xylylendiamin (mXDA), 1,3-Bis(aminomethyl)-cyclohexan (1,3-BAC), 4,4'-Methylenbis(cyclohexyl-amin) (PACM), 4-Methylcyclohexan-1,3-diamin (mCDA), 1,2-Diaminocyclohexan (1,2-BAC) sowie Mischungen daraus.

9. Verwendung nach einem der vorhergehenden Ansprüche, **dadurch gekennzeichnet, dass** das Salz (S) mindestens in der Härterkomponente (B) enthalten ist.

10. Verwendung nach einem der vorhergehenden Ansprüche, **dadurch gekennzeichnet, dass** das Salz (S) in einem Anteil von 0,1 bis 4 Gew.-% bezogen auf das Gesamtgewicht der Epoxidharzmasse in der Epoxidharzmasse enthalten ist.

11. Verwendung gemäß einem der Ansprüche 3 bis 10, **dadurch gekennzeichnet, dass** das härtbare Epoxidharz ein Diglycidylether von Bisphenol A oder von Bisphenol F oder einem Gemisch davon ist.

12. Verfahren zur chemischen Befestigung von Konstruktionsmitteln und/oder Verankerungsmitteln, wobei eine Mehrkomponenten-Epoxidharzmasse verwendet wird, die eine Epoxidharzkomponente (A), die wenigstens ein härtbares Epoxidharz enthält, und eine Härterkomponente (B), die mindestens ein gegenüber Epoxidgruppen reaktives Amin enthält, umfasst, und in der die Epoxidharzkomponente (A) und die Härterkomponente (B) reaktionsinhibierend getrennt voneinander vorliegen, wobei die Epoxidharzkomponente (A) und/oder die Härterkomponente (B) als Beschleuniger wenigstens ein Salz (S) umfasst, wobei das Salz (S) ausgewählt ist aus der Gruppe bestehend aus Salzen der Salpetersäure, Salzen der Salpetrigen Säure, Salzen der Halogene, Salzen der Trifluormethansulfonsäure sowie Kombinationen davon.

13. Verfahren gemäß Anspruch 12, wobei die Mehrkomponenten-Epoxidharzmasse in Patronen, Kartuschen oder Folienbeuteln vorliegt, die zwei oder mehrere voneinander getrennte Kammern umfassen, in welchen die Epoxidharzkomponente (A) und die Härterkomponente (B) reaktionsinhibierend voneinander getrennt angeordnet sind.

14. Verfahren gemäß Anspruch 13, wobei die Epoxidharz-komponente (A) und die Härterkomponente (B) aus den getrennten Kammern entleert werden und in einem Statikmischer oder Dissolver gemischt werden.

15. Verfahren gemäß Anspruch 14, wobei die gemischte Mehrkomponenten-Epoxidharzmasse in ein Bohrloch, vorzugsweise in ein zuvor gereinigtes Bohrloch, eingebracht wird.

**Europäisches Patentamt**
**European Patent Office**
**Office européen des brevets**

# EUROPÄISCHER RECHERCHENBERICHT

Nummer der Anmeldung

EP 18 19 5409

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 5 629 380 A (BALDWIN JOHN M [US] ET AL) 13. Mai 1997 (1997-05-13) | 1-4,6,7, 9-11 | INV. C08G59/68 |
| A | * Beispiele 7-22 * | 5,8, 12-15 | C09J163/00 |
| | ----- | | |
| X | EP 1 319 677 A1 (HEXCEL COMPOSITES LTD [GB]) 18. Juni 2003 (2003-06-18) | 1-4,6-10 | |
| Y | * Beispiele 1, 2 * | 5,12-15 | |
| | ----- | | |
| X,D | GB 1 105 772 A (DYNAMIT NOBEL AG) 13. März 1968 (1968-03-13) | 1-4,6,7, 9-11 | |
| A | * Beispiele 1-4 * | 5,8, 12-15 | |
| | ----- | | |
| Y | WO 2015/049229 A1 (BASF SE [DE]) 9. April 2015 (2015-04-09) * Beispiele 1-20 * | 5,12-15 | |
| | ----- | | |

RECHERCHIERTE SACHGEBIETE (IPC)

C08G
C09J

Der vorliegende Recherchenbericht wurde für alle Patentansprüche erstellt

| Recherchenort | Abschlußdatum der Recherche | Prüfer |
|---|---|---|
| Den Haag | 12. Februar 2019 | Scheunemann, Sven |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

..............................................................................

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 18 19 5409

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-02-2019

| Im Recherchenbericht angeführtes Patentdokument | Datum der Veröffentlichung | Mitglied(er) der Patentfamilie | Datum der Veröffentlichung |
|---|---|---|---|
| US 5629380 A | 13-05-1997 | KEINE | |
| EP 1319677 A1 | 18-06-2003 | AT 318278 T | 15-03-2006 |
| | | DE 60209319 T2 | 12-10-2006 |
| | | DK 1319677 T3 | 06-06-2006 |
| | | EP 1319677 A1 | 18-06-2003 |
| | | ES 2259363 T3 | 01-10-2006 |
| | | US 2003130481 A1 | 10-07-2003 |
| GB 1105772 A | 13-03-1968 | AT 265649 B | 25-10-1968 |
| | | BE 661650 A | 27-09-1965 |
| | | CH 437812 A | 15-06-1967 |
| | | GB 1105772 A | 13-03-1968 |
| | | NL 6503813 A | 27-09-1965 |
| | | US 3492269 A | 27-01-1970 |
| WO 2015049229 A1 | 09-04-2015 | CN 105593263 A | 18-05-2016 |
| | | EP 3052540 A1 | 10-08-2016 |
| | | US 2016208042 A1 | 21-07-2016 |
| | | WO 2015049229 A1 | 09-04-2015 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 1105772 A
- US 2016053108 A1
- US 2003130481 A1
- US 5958593 A
- EP 3000792 A1

**In der Beschreibung aufgeführte Nicht-Patentliteratur**

- IUPAC Compendium of Chemical Terminology. **A. D. MCNAUGHT ; A. WILKINSON.** Gold Book. Blackwell Scientific Publications, 1997
- **MICHAEL DORNBUSCH ; ULRICH CHRIST ; ROB RASING.** Epoxidharze. Vincentz Network GmbH & Co KG, 2015